# EUROPEAN PATENT APPLICATION

(11) **EP 4 760 125 A1**
(43) Date of publication of application: **17.06.2026**
(21) Application number: 25223552.8
(22) Date of filing: 15.12.2025
(51) Int. Cl.: F16H 55/14, F16H 57/00, B62M 11/00, B62M 21/00, F16H 1/08

(54) **A CONTINUOUSLY VARIABLE TRANSMISSION UNIT AND REDUCTION GEAR WITH FLEXIBLE COUPLING**

(30) Priority: 16.12.2024 IT 202400028629
(71) Applicant: Piaggio & C. S.P.A., 56025 Pontedera Pisa (IT)
(72) Inventor: MAGHERINI, Adriano, 56025 Pontedera (PI) (IT); SPERA, Stefano, 56025 Pontedera (PI) (IT); BRUNO, Pellegrino, 56025 Pontedera (PI) (IT)
(74) Representative: Mannucci, Michele

(57) **Abstract**

The transmission unit comprises a continuously variable transmission having a drive pulley, a driven pulley, a drive belt between the drive pulley and the driven pulley, and a clutch having an input shaft, mechanically connected to the driven pulley, and an output shaft. The transmission unit further comprises a gear reducer with a plurality of gearwheels arranged between the output shaft of the clutch and a driven shaft adapted to be connected to a drive wheel. A flexible coupling device is associated with one of the gearwheels of the gear reducer.

## Description

### TECHNICAL FIELD

The invention relates to transmission assemblies comprising continuously variable transmissions, as well as motor vehicles comprising such transmission assemblies. In particular, the invention relates to transmission assemblies, for two-or three-wheeled motor vehicles, such as scooters or other straddle-type vehicles, and relative transmission assemblies.

### BACKGROUND ART

In the motor vehicle industry, especially of the straddle-type, such as motorcycles, scooters and the like, two-or three-wheeled with reciprocating internal combustion engine, there are frequently used motion transmission assemblies between the internal combustion engine and the drive wheel, which comprise the so-called continuously variable transmissions (in short CVT). The continuously variable transmissions are devices that continuously change the transmission ratio between the internal combustion engine and the drive wheel or drive wheels and they are very practical especially for motor vehicles designed for use in urban areas. A transmission unit comprising a continuously variable transmission is disclosed in WO2020/141413.

Straddle-type motor vehicles often use internal combustion engines with a limited number of cylinders, often only one cylinder. These engines have a defect, implicit in the nature of the combustion cycle which transforms the chemical energy of the fuel into mechanical drive energy, which is represented by the non-constant engine torque output delivered by the engine. The irregularity of the delivered torque increases as the revolution speed of the internal combustion engine reduces and it is therefore perceived by the rider especially in urban cycles.

Modern engine-transmission assemblies are designed to run at low revolutions, so as to reduce harmful emissions. This is advantageous in terms of reducing environmental impact. However, it is a drawback regarding the riding, given that reducing the revolution speed entails greater irregularity of the torque delivered to the drive wheel by the internal combustion engine.

In order to reduce this drawback, along the kinematic chain which transmits motion from the internal combustion engine to the drive wheel a flexible coupling is usually interposed. This component may be cumbersome and negatively affect the size of the motion transmission line.

Therefore, a need exists to provide flexible coupling devices that are efficient and compact in transmission assemblies comprising a continuously variable transmission.

### SUMMARY

According to one aspect, the invention relates to a transmission unit comprising a continuously variable transmission, having a drive pulley, a driven pulley, and a drive belt between the drive pulley and the driven pulley. The continuously variable transmission further comprises a clutch having an input shaft, mechanically connected to the driven pulley, and an output shaft. The transmission unit also comprises a gear reducer with a plurality of gearwheels arranged between the output shaft of the clutch and a driven shaft adapted to be connected to a drive wheel. A flexible coupling device is associated with one of the gearwheels of the gear reducer. Combining the flexible coupling device with one of the gearwheels of the gear reducer allows to obtain an efficient and compact configuration of the transmission unit.

In some embodiments, the gear reducer comprises a first helical gearwheel, arranged on a first shaft and a second helical gearwheel meshing with the first helical gearwheel and keyed on a second shaft. The first helical gearwheel is torsionally coupled to the first shaft and axially slidable along the first shaft. In this case, the flexible coupling device may comprise an elastic member which axially urges the first helical gearwheel towards an inoperative position in a direction opposite to an axial thrust which is generated on the first helical gearwheel when the transmission unit is operating and transmits a torque from the output shaft of the clutch towards the driven shaft. Furthermore, an elastic damping abutment may be provided, towards which the first helical gearwheel is urged axially by the elastic member.

In this manner, the flexible coupling device basically comprises an elastic member coaxial to a helical gearwheel of the gear reducer. The elastic member is compressed to a greater or lesser extent depending on the axial thrust generated by the torque transmitted through the mutually meshing helical gearwheels. Basically, the flexible coupling device occupies a space previously provided in the gear reducer, without having to add cumbersome components which require additional space with respect to the space provided for the gearwheels of the gear reducer.

In other embodiments, the flexible coupling device may be integrated in a gearwheel of the gear reducer, and it may be interposed between the gearwheel and a support shaft of said gearwheel. The flexible coupling device may in this case comprise at least one elastic member configured to absorb torque peaks transmitted between the gearwheel and the support shaft of the gearwheel.

In some embodiments, the flexible coupling device comprises a sleeve which is torsionally constrained to the support shaft. In this case, the gearwheel is rotatably supported on the sleeve, and the sleeve is torsionally coupled to the gearwheel through said at least one elastic member.

For example, the sleeve may comprise at least one radial element protruding in a tangential cavity of the gearwheel. The elastic member may be interposed between a first radial wall of the tangential cavity of the gearwheel and the radial element of the sleeve. A second elastic member may be interposed between a second radial wall of the tangential cavity of the gearwheel and the radial element of the sleeve.

This configuration allows to obtain an ultra-compact flexible coupling. A flexible coupling device of this type may be advantageously used also in other mechanical assemblies, other than the transmission unit. Basically, the flexible coupling device according to this embodiment may be used in any application in which two mutually meshing gearwheels are provided, and which transmit a torque which may be uneven or variable.

According to a further aspect, the invention relates to a motor vehicle comprising an internal combustion engine and a drive wheel connected to the internal combustion engine through a transmission unit as defined above. Advantageously, the motor vehicle may be a straddle-type motor vehicle, that is for example a motorcycle or a scooter.

### BRIEF DESCRIPTION OF THE DRAWINGS

The invention will be clearer from the description and the attached drawings, which illustrate embodiments of the invention provided by way of non-limiting example. More particularly, in the drawings:
Fig.1 is a lateral view of a scooter on which there may be installed a transmission unit according to the invention;
Fig.2 is a simplified diagram of a continuously variable transmission of the transmission unit;
Fig.3 is a cross-section of the gear reducer in an embodiment, according to a plane containing the axis of the output shaft of the clutch of the continuously variable transmission;
Figs.4A, 4B and 4C are an enlargement of the cross-section of Fig.3 in three different operating conditions of the transmission unit;
Fig.5 is a cross-section of the gear reducer in a further embodiment, according to a plane containing the axis of the output shaft of the clutch of the continuously variable transmission;
Figs.6A, 6B and 6C are an enlargement of the cross-section of Fig.5 in three different operating conditions of the transmission unit;
Fig.7 is a cross-section, according to a plane containing the axes of the pulleys of the continuously variable transmission, of the transmission unit in a further embodiment;
Fig.8 is a front view, according to line VIII-VIII of Fig.10 of the double gearwheel containing the elastic members of the embodiment of Fig.7,
Fig. 9 is a cross-section according to IX-IX of Fig.8;
Fig.10 is a sectioned axonometric view of the double gearwheel of figs. 8 and 9;
Fig.11 is a cross-section according to XI-XI of Fig. 12;
Fig.12 is a view according to XII-XI of Fig.11; and
Fig.13 is a view according to XIII-XII of Fig.12;

### DETAILED DESCRIPTION

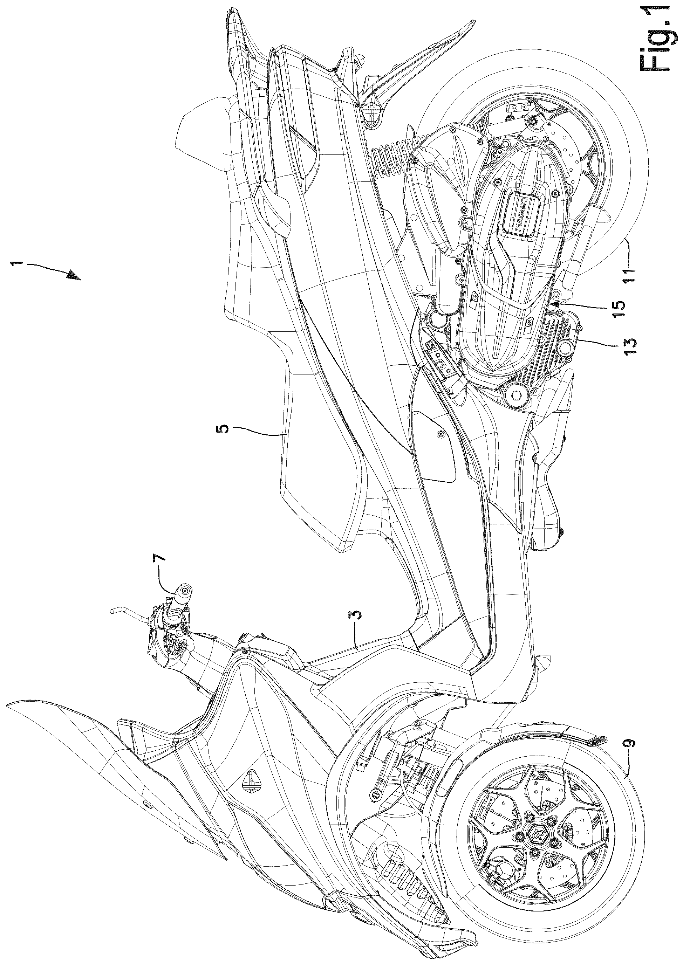

Fig.1 shows by way of example a scooter 1 on which a transmission unit with continuously variable transmission according to the present invention may be installed. The scooter 1 comprises a chassis 3, a saddle 5, a handlebar 7, a front wheel 9, a rear wheel 11, an engine 13 and a transmission unit 15. The scooter 1 is shown by way of example, as one of the possible motor vehicles on which the transmission unit disclosed herein may be installed.

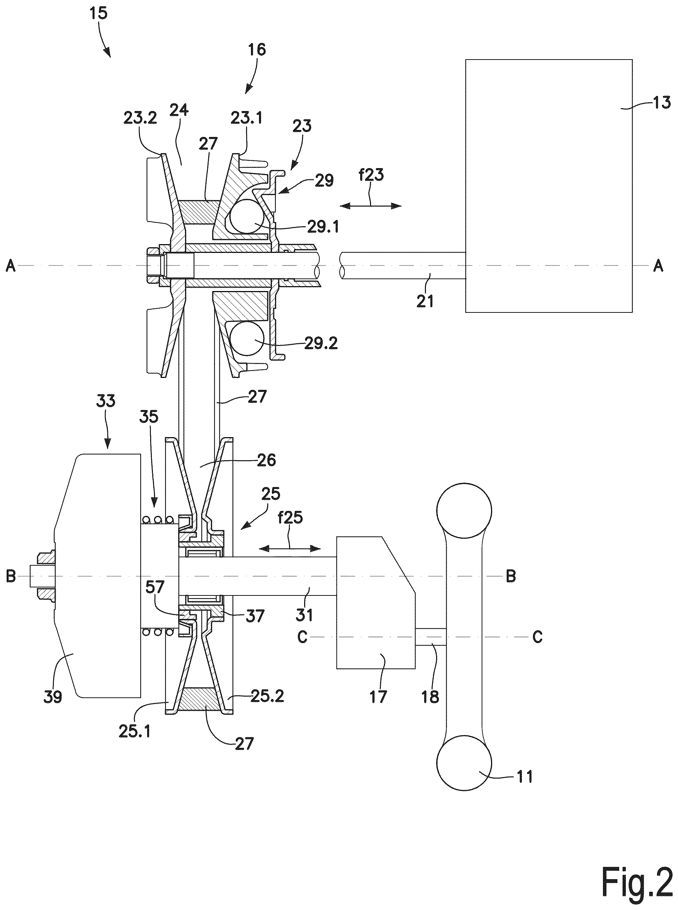

Fig.2 shows a schematic representation of the main elements of the transmission unit 15, comprising a continuously variable transmission 16. In Fig.2, the engine 13 and the drive wheel 11 are only shown schematically.

Generally indicated with 17 is a gear reducer interposed between the continuously variable transmission 16 and the rear drive wheel 11. Indicated with 18 is the output shaft of the gear reducer 17, hereinafter referred to as drive wheel, and indicated with C-C is the rotation axis of the drive wheel 11 and of the driven shaft 18 of the gear reducer 17.

The engine 13 comprises a drive shaft 21, on which a drive pulley 23 of the continuously variable transmission 16 is keyed. The drive pulley 23 comprises a first semi-drive pulley 23.1 and a second semi-drive pulley 23.2 which form between them a groove 24 with a variable axial dimension, that is a groove, whose width in the direction of the rotation axis A-A of the drive shaft 1 may vary as a function of the travel conditions. The continuously variable transmission 16 further comprises a driven pulley 25. The driven pulley 25 in turn comprises a first semi-driven pulley 25.1 and a second semi-driven pulley 25.2, rotatable around a rotation axis B-B of the driven pulley 25. Also the semi-driven pulleys 25.1, 25.2 are movable with respect to each other in the axial direction, i.e., parallel to the rotation axis B-B, so as to change the width of a groove 26 defined between the semi-driven pulleys 25.1, 25.2.

Between the two pulleys 23, 25 a belt 27 is guided, which transmits the motion of the drive pulley to the driven pulley 25.

In the illustrated embodiment, the first semi-drive pulley 24.1 is movable parallel to the rotation axis A-A of the drive shaft 21 according to the double arrow f23, as and for the purposes described below, but torsionally coupled to the drive shaft 21, so as to rotate integrally therewith. On the other hand, the second semi-drive pulley 23.2 is keyed in an axially fixed position on the drive shaft 21, so as to rotate with the drive shaft 21 and without the possibility of axial movement there along. Therefore, the first semi-drive pulley 23.1 is also indicated as a movable semi-drive pulley and the second semi-drive pulley 23.2 is also indicated as a fixed semi-drive pulley, where the definitions "movable" and "fixed" refer to an axial movement with respect to the rotation axis A-A of the drive shaft 21, with which the drive pulley 23 is torsionally coupled.

The movement of the movable semi-drive pulley 23.1 is controlled by a centrifugal force mechanism 29, which comprises one or more rolling bodies 29.1, for example spherical or cylindrical, housed between a shaped disc 29.2 and the outer lateral surface of the movable semi-drive pulley 23.1. The shaped disc 29.2 is keyed on the drive shaft 21 in a fixed position. The belt 27, with trapezoidal cross-section, is stretched by an elastic device associated with the driven pulley 25, described below, due to which the belt 27 tends to be pulled towards the axis A-A of the drive shaft 21, pushing the movable semi-drive pulley 23.1 to move away from the fixed semi-drive pulley 23.2.

When the drive shaft 21 rotates around the axis A-A driven by the engine 13, the rolling body or rolling bodies 29.1 are subjected to a centrifugal force which tends to radially move them away from the rotation axis A-A of the drive shaft 21. The thrust generated by the centrifugal force causes an axial force which pushes the movable semi-drive pulley 23.1 towards the fixed semi-drive pulley 23.2. The thrust and the ensuing mutual approaching of the two semi-drive pulleys 23.1, 23.2 causes a radial outward movement of the portion of the belt 27 received in the groove of the drive pulley 23, defined between the two semi-drive pulleys 23.1, 23.2.

This outward radial movement caused by the centrifugal force, changes the transmission ratio between the drive pulley 23 and driven pulley 25, due to the displacement of the loop of the belt 27 guided around the two pulleys. The moving away of the belt 27 from the axis A-A of the drive shaft 21, actually causes, due to the substantial inextensibility of the belt 27, an approaching of the loop of the belt 27 guided around the driven pulley 25 to the rotation axis B-B of the latter. The movement for approaching to the axis B-B of the loop of the belt 27 guided in the groove 26 of the driven pulley 25 occurs simultaneously with a mutual moving apart movement between the semi-driven pulleys 25.1, 25.2. More particularly, in the illustrated embodiment, the semi-driven pulley 25.2 is torsionally and axially fixed with respect to a hollow shaft 37. Vice versa, the semi-driven pulley 25.1 is torsionally coupled to a hollow shaft 57 coaxial to the hollow shaft 37, which is axially movable with respect to the hollow shaft 37 and torsionally coupled to the hollow shaft 37 to rotate integrally therewith.

Therefore, the hollow shaft 57 and the semi-pulley 25.1 rotate together with one another and are axially movable according to the double arrow f25 with respect to the hollow shaft 37 and the semi-driven pulley 25.1. The semi-driven pulley 25.1 is therefore herein also indicated as a movable semi-driven pulley, while the semi-pulley 25.2 is indicated as a fixed semi-driven pulley.

Around the hollow shaft 57 an elastic member is arranged, in the example a helical spring 65, which urges the movable semi-driven pulley 25.1 in the axial direction towards the fixed semi-driven pulley 25.2. The force generated by the spring 65 urges the semi-driven pulleys 25.1, 25.2 to take a position of maximum approaching, and therefore a condition of minimum width of the groove 26 of the driven pulley 25 which corresponds to a short transmission ratio between the drive pulley 23 and the driven pulley 25, i.e., a low gear. Due to the inextensibility of the drive belt 27, a position of maximum distance between the semi-drive pulleys 23.1, 23.2 (see Fig.2) corresponds to this position of maximum approaching between the semi-driven pulleys 25.1, 25.2.

Basically, the approaching/moving away movement of the semi-pulleys 23.1, 23.2 caused by the centrifugal force mechanism 29, causes a corresponding mutual moving away/ approaching movement of the semi-pulleys 25.1, 25.2 with resulting change of the circumference around which the belt 27 is guided around the pulleys: when the circumference around the axis A-A decreases, the circumference around B-B decreases, and vice versa, with a resulting increase in the transmission ratio (therefore a shifting from a short gear to a long gear), and vice versa.

An automatic clutch 33 is associated with the driven pulley 25 of the continuously variable transmission 16.

The automatic clutch 33 comprises a motion input shaft from the driven pulley 25 to the automatic clutch 33. The input motion shaft is represented by the hollow shaft 37 coupled to the fixed semi-driven pulley 25.2. The motion input shaft 37 is hollow and a motion output shaft 31 extends therein. The output shaft 31 represents the shaft for the output of motion from the continuously variable transmission 16 and represents the input shaft of the gear reducer 17, which transmits motion to the drive wheel 11 through the driven shaft 18. The latter represents the output shaft of the gear reducer 17.

The shaft 37 for the input of motion into the automatic clutch 33 and the shaft 31 for the output of motion from the automatic clutch 33 are, therefore, in this embodiment not only coaxial, but also concentric. A different arrangement, in which the two shafts are for example coaxial but not concentric, but rather arranged sequentially aligned with each other, cannot be ruled out.

The automatic clutch 33 further comprises a bell or hollow body 39, torsionally coupled to the output shaft 31, i.e., rotatably integrally joined with the output shaft 31. The bell 39 has an approximately cylindrical wall 39.1, with an inner surface 39.2, with which there cooperate centrifugal masses 41 which are radially movable with respect to the axis B-B and which act as a member for transmitting rotation motion from the input shaft 37 to the shaft 31 for the output of motion when the automatic clutch 33 is engaged.

Each centrifugal mass 41 is hinged through a pin 43 to a disc 44 integrally joined with the motion input shaft 37. Besides the disc 44, the pins 43 are connected to a ring 46 coaxial to the rotation axis A-A of the motion input shaft 37.

The centrifugal masses 41 are urged by elastic members, not shown, towards an inoperative centripetal position, of maximum approaching to the rotation axis B-B. As the rotation speed of the driven pulley 25, and therefore of the hollow shaft 37 (shaft for the input of motion into the automatic clutch 33) increases, the centrifugal force acting on the centrifugal masses 41 increases and overcomes the force of the elastic members, radially displacing the centrifugal masses 41 outwardly. In this manner, the centrifugal masses 41, pushed by the centrifugal force press against the inner surface 39.2 of the bell 39, transmit to the bell 39 the drive torque delivered by the engine 13 and transmitted through the continuously variable transmission 16 and the hollow shaft 37. The bell 39 is torsionally coupled to the shaft 31 for the output of motion from the automatic clutch 33 near a first end 31.1 of such shaft 31. For example, the coupling between the bell 39 and shaft 31 may be obtained with a splined profile 31.2.

The continuously variable transmission described up to now is per se known. It is presented as a possible embodiment of the continuously variable transmission. In other embodiments, the continuously variable transmission 16 may have a structure other than the one described herein and shown in the attached drawings.

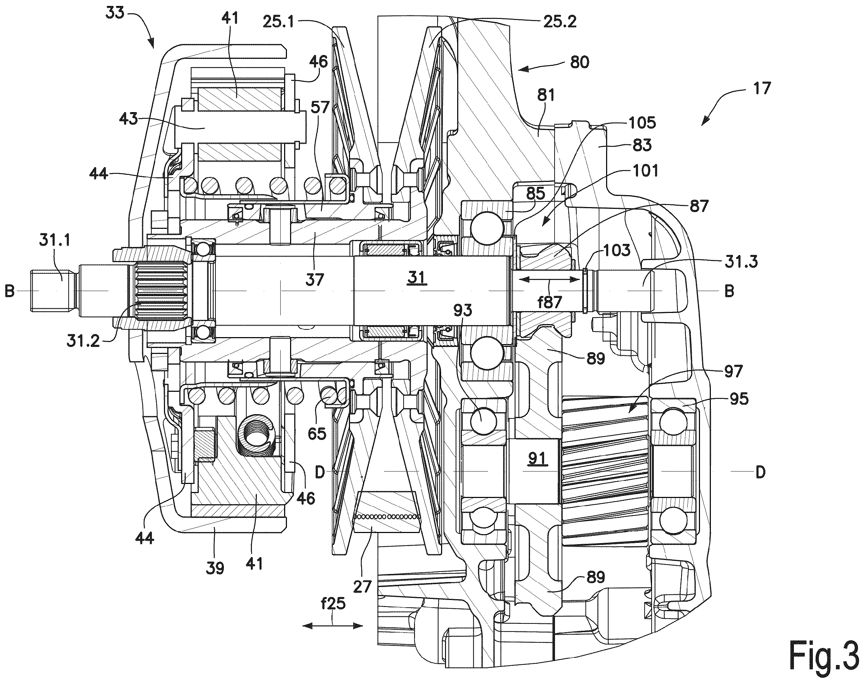

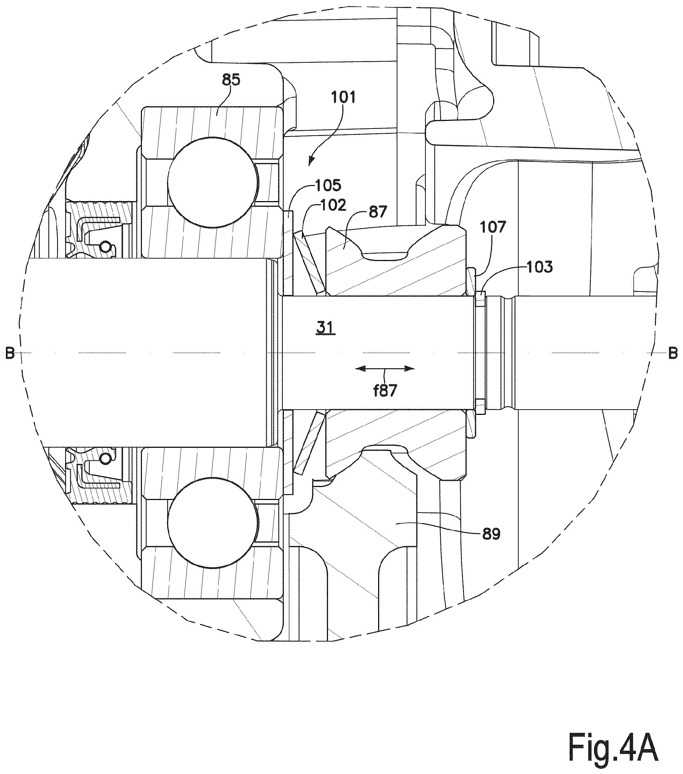

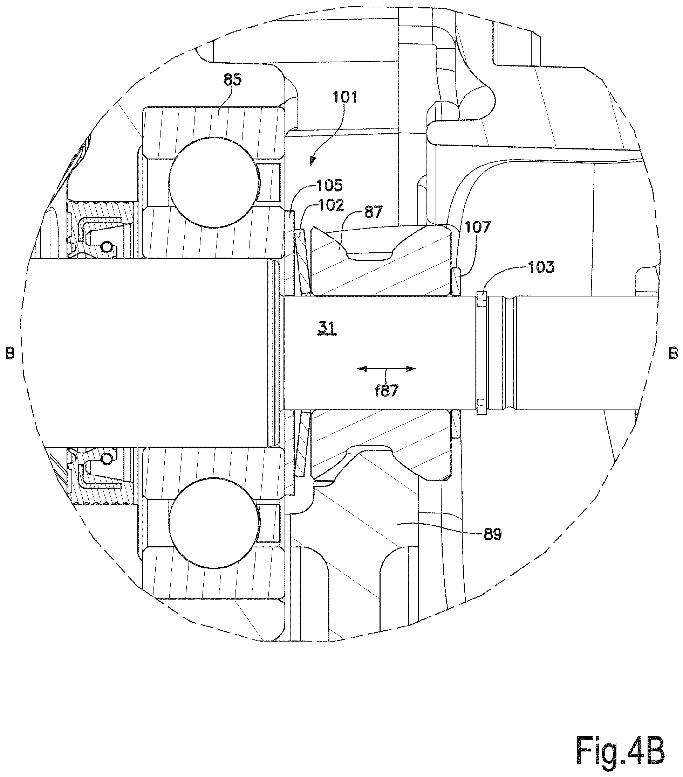

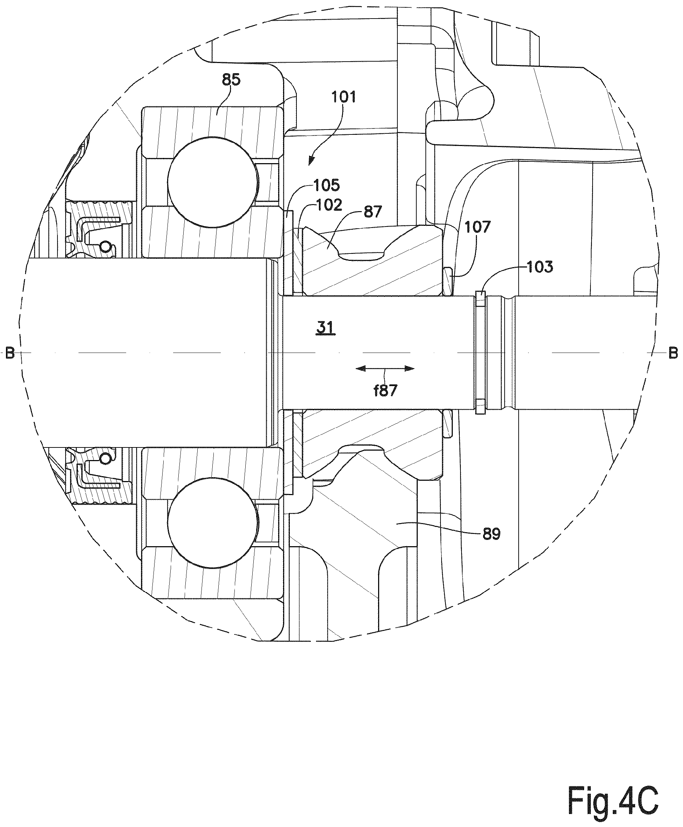

Figs. 3, 4A, 4B and 4C show a first embodiment of the gear reducer 17, in which a flexible coupling is incorporated, having the purpose of reducing the effect of the unevenness of the drive torque delivered by the engine 13, in particular a low number of revolutions, on the drive wheel.

In the embodiment of Figs. 3, 4A, 4B and 4C the main elements of the gear reducer 17 are shown.

The gear reducer 17 is housed in a casing 80 having a main body 81 and a lid 83. The gear reducer 17 comprises a plurality of gearwheels, which transmit motion from a first shaft, represented by the input shaft of the gear reducer 17 (consisting of the output shaft 31 of the automatic clutch 33), and the output shaft 18 of the gear reducer 17.

In the illustrated embodiment, the shaft 31 is supported by two bearings, one of which is shown in the figure and indicated with 85 and is mounted in a seat of the casing 80. The other bearing and the seat thereof, formed in the casing 80, is removed for the sake of representation simplicity. The bearing 85 is positioned between a driven pulley 25 of the continuously variable transmission 16 and a first gearwheel 87 with helical gears, mounted on the shaft 31 rotating therewith around the axis B-B, but which is axially movable along the axis B-B, for the purposes clarified hereinafter. Specifically, in the illustrated embodiment, the first gearwheel 87 with helical gears is mounted cantilevered on the shaft 31.

The first gearwheel 87 with helical teeth meshes with a second gearwheel 89 with helical teeth, which rotates integrally joined with a second shaft of the gear reducer 17, herein indicated as auxiliary shaft 91, supported idle in the casing 80 through bearings 93, 95. The rotation axis of the auxiliary shaft 91 is indicated with D-D and, in the illustrated example, is parallel to the axes A-A, B-B and C-C. The second gearwheel 89 with helical teeth may be made of a single piece with the auxiliary shaft 91, or may be keyed thereon. In any case, the second gearwheel 89 with helical teeth is axially fixed with respect to the auxiliary shaft 91.

With the auxiliary shaft 91 there is integrally coupled a further gearwheel 97, which can be keyed to the auxiliary shaft 91 or made of a single piece therewith. The further gearwheel 97, also possibly with helical teeth, may mesh with an output gearwheel, keyed on the driven shaft 18, and not shown in Fig.3.

A flexible coupling device described below is positioned in the gear reducer 17, and specifically in the series of gearwheels, between the automatic clutch 33 and the driven shaft 18.

In some embodiments, the flexible coupling device comprises an elastic member which axially urges the first helical gearwheel 87 in an inoperative position, in a direction opposite to an axial thrust which is generated on the first helical gearwheel 87 when the transmission unit 15 is operating and transmits a torque from the output shaft 31 of the automatic clutch 33 towards the driven shaft 18.

In the embodiment of Figs. 3, 4A, 4B and 4C, the flexible coupling device is indicated with 101 and comprises an elastic member 102 coaxial to the shaft 31. In the illustrated embodiment, the elastic member 102 comprises a Belleville washer, placed between the bearing 85 and the first helical gearwheel 87. The Belleville washer 102 is arranged so as to urge the first helical gearwheel 87 in an inoperative position, towards the distal end 31.3 of the shaft 31, i.e., away from the automatic clutch 33. The axial sliding movement of the first helical gearwheel 87 is allowed by the fact that it is torsionally coupled to the shaft 31, that is it rotates integrally therewith, but can slide axially along said shaft 31. For example, the coupling between the first helical gearwheel 87 and the shaft 31 may be obtained by a splined profile coupling, or with a key.

In Figs. 3, 4A, 4B, 4C the double arrow f87 represents the axial sliding movement of the first helical gearwheel 87 with respect to the shaft 31.

The axial movement in the direction f87 of the first gearwheel 87 along the shaft 81 is limited towards the distal end 31.3 by an abutment 103, for example formed by a Seeger ring. In the opposite direction, that is towards the bearing 85, the axial movement is limited by the internal ring of the bearing 85 and by an elastic abutment 105, for example a damping elastic ring coaxial to the shaft 31.

A second elastic damping abutment 107 may be provided between the first helical gearwheel 87 and the abutment 103.

Figs. 4A, 4B and 4C show the two end positions of the first helical gearwheel 87 with respect to the shaft 31, and an intermediate position. More particularly, Fig.4A shows the inoperative position of the first helical gearwheel 87, i.e., the position of maximum distance from the bearing 85 and from the automatic clutch 33. This position is taken by the helical gearwheel 87 when the axial thrust generated by the torque transmitted between the first helical gearwheel 87 and the second helical gearwheel 89 is sufficiently limited so as not to cause a contraction of the Belleville washer 102. The latter pushes the first helical gearwheel 87 against the abutment 103.

An increase in the torque transmitted between the first helical gearwheel 87 and the second helical gearwheel 89 causes an increase in the axial thrust on the first helical gearwheel 87 and therefore a compression of the Belleville washer 102. The degree of axial displacement of the first helical gearwheel 87 towards the bearing 85 is given by the degree of axial thrust exchanged between the two helical gearwheels 87, 89. The position assumed at any instant of operation by the transmission unit 15 is defined by the degree of contraction of the Belleville washer 102 which generates a force which balances the axial force exchanged between the two helical gearwheels 87, 89. Fig.4C shows the position of maximum compression of the Belleville washer 102 and Fig.4B shows an intermediate position between the two end positions shown in Figs. 4A and 4C.

The deformability of the Belleville washer 102 allows to absorb torque peaks or sudden torque reductions, which may occur during the operation of the motor vehicle, especially when running at low revolutions. The change in the elastic energy stored in the Belleville washer 102 reduces the torque oscillations on the output shaft 18.

The configuration of the flexible coupling device 101 is such to occupy a very limited space and, basically, it does not increase the overall dimensions of the gear reducer 17.

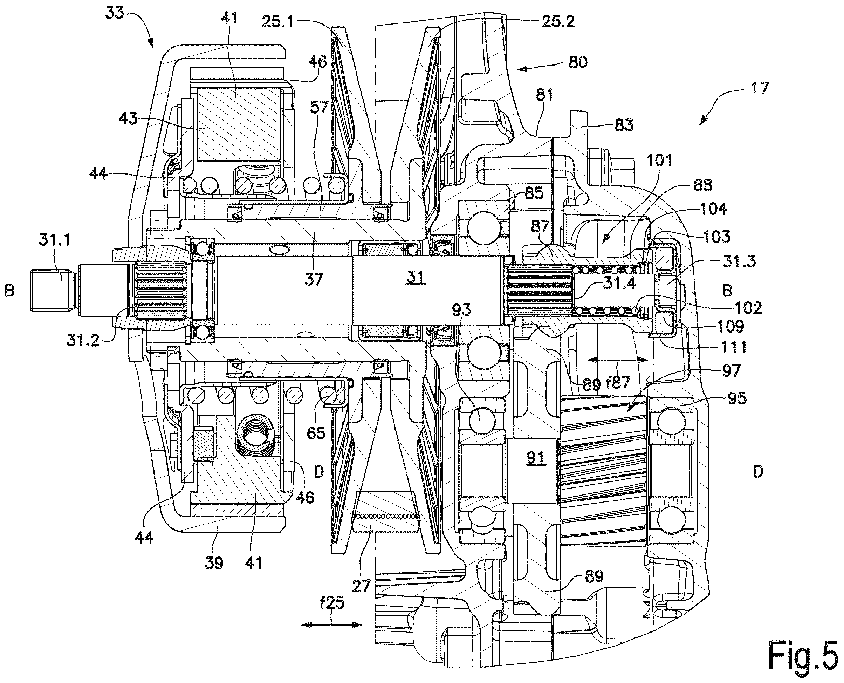

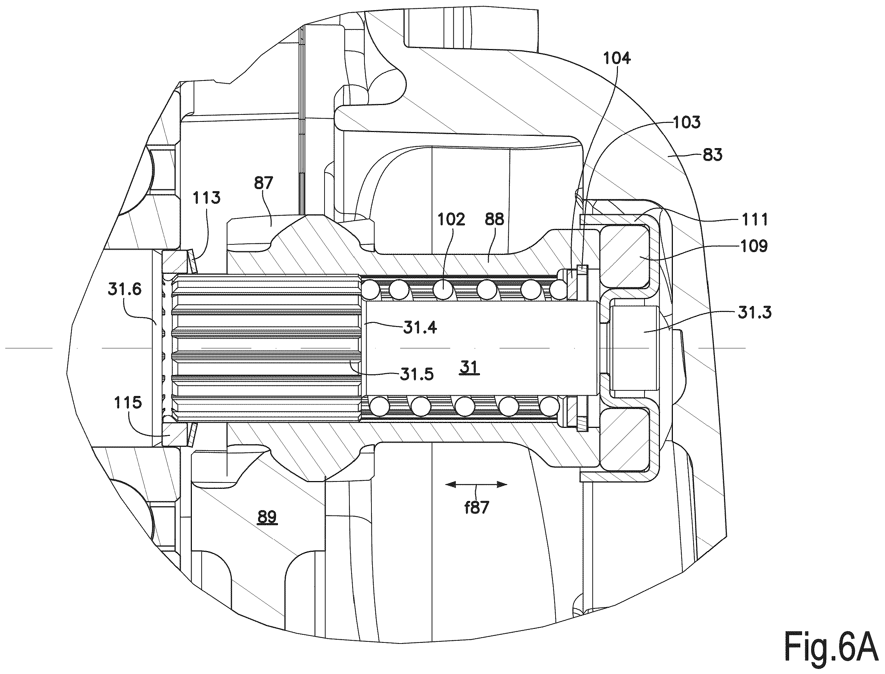

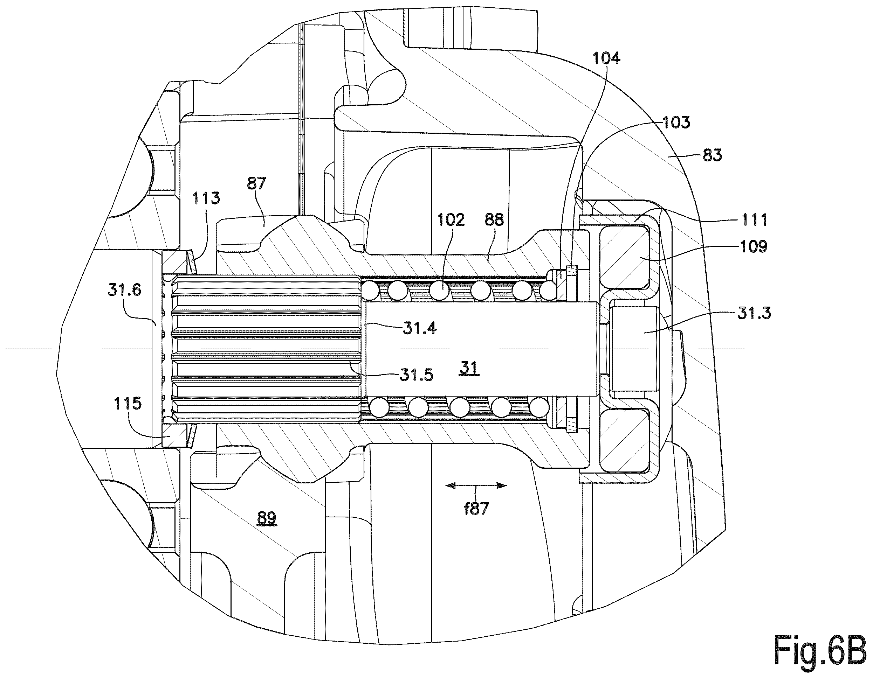

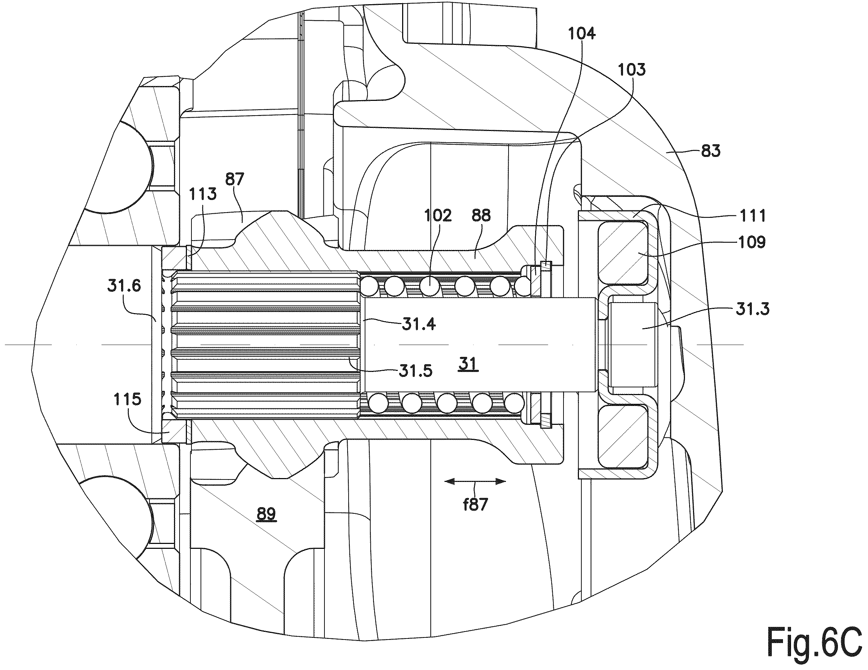

Figs. 5, 6A, 6B and 6C show another embodiment of the flexible coupling device according to the present invention. Elements identical or corresponding to the ones shown in Figs. 3, 4A, 4B and 4C are indicated with the same reference numerals.

In this second embodiment, the gear reducer 17 is still housed in a casing 80 having a main body 81 and a lid 83 and has a plurality of gearwheels, which transmit motion from the input shaft of the gear reducer 17, consisting of the output shaft 31 of the automatic clutch 33, to the output shaft 18 of the gear reducer 17.

The shaft 31 is supported by bearings mounted in seats of the casing 80, one of which is shown in the drawing and marked with 85. Similarly to the previously described embodiment, the bearing 85 is mounted between the driven pulley 25 of the continuously variable transmission 16 and a first helical gearwheel 87 mounted on the shaft 31 and torsionally coupled to the shaft 31, rotating therewith around the axis B-B, but free to carry out a limited movement in the axial direction along the shaft 31.

The first helical gearwheel 87 meshes with a second helical gearwheel 89, rotating integrally with a second shaft of the gear reducer 17, herein referred to as auxiliary shaft 91, idly supported in the casing 80 by bearings 93, 95 and rotating around an axis D-D, in the example parallel to the axis A-A, B-B and C-C. The second helical gearwheel 89 may be made of a single piece with the auxiliary shaft 91, or it may be keyed thereon. In any case, the second helical gear 89 is axially fixed with respect to the auxiliary shaft 91.

With the auxiliary shaft 91 a further gearwheel 97 is integrally connected, which can be keyed to the auxiliary shaft 91 or made of a single piece therewith. The further gearwheel 97, also possibly with helical gears, may mesh with an output gearwheel, keyed on the driven shaft 18, and not shown in the drawing.

In this embodiment, the first helical gearwheel 87 is integrally joined with a bushing 88, which forms, around the shaft 31, a seat for an elastic member, indicated in its entirety with 101.

In the embodiment shown in Figs. 5 and 6A-6C the bushing 88 extends from the main body, which forms the first helical gearwheel 87, towards the cantilevered distal end 31.3 of the shaft 31. In this embodiment, the elastic member of the flexible coupling device 101 comprises a helical spring 102.

In this embodiment, the helical spring 102 is housed in the seat formed between the bushing 88 and the output shaft 31 of the automatic clutch 33 and reacts between an abutment formed by the shaft 31 and an inner projection of the bushing.

In some embodiments, the abutment formed on the shaft 31 may be obtained at a splined profile 31.4 with which the shaft 31 is torsionally coupled to the bushing 88.

The inner projection of the bushing 88 may comprise a Seeger ring 103 on which a perforated disc 104 coaxial to the shaft 31 rests.

A damping abutment 109, for example annular-shaped, may be fitted at the distal end 31.3 of the shaft 31. The damping abutment may be housed in a seat formed by a collar 111.

The spring 102 is arranged so as to urge the first helical gearwheel 87 in an inoperative position, towards the distal end 31.3 of the shaft 31, i.e., moving away from the automatic clutch 33. The axial sliding movement of the first helical gearwheel 87 is allowed by the splined profile 31.4. In Figs. 5, 6A, 6B and 6C the double arrow f87 represents the axial sliding movement of the first helical gearwheel 87 with respect to the shaft 31.

The axial movement, that is the axial stroke, in the direction f87, of the first gearwheel 87 along the shaft 81 is delimited towards the distal end 31.3 from the damping abutment 109. In the opposite direction, the axial stroke is limited by a further abutment 31.6 formed by the shaft 31. In the illustrated embodiment, the abutment 31.6 is associated with a damping element 113, for example in form of a Belleville washer, coaxial to the shaft 31 and arranged between the abutment 31.6 and the bushing 88, and more precisely between a ring 115 and the bushing 88. This allows to form an elastic damping abutment which damps any impacts of the bushing 88 in the movement towards the bearing 85.

Figs. 6A, 6B and 6C show, similarly to the above-described Figs. 4A, 4B and 4C, respectively the two end positions and an intermediate position of the first helical gearwheel 87 with respect to the shaft 31.

More particularly, Fig.6A shows the inoperative position of the first helical gearwheel 87, i.e., the position of maximum distance from the bearing 85 and from the automatic clutch 33. Fig.6C shows the position of maximum compression of the helical spring 102 and Fig.6B shows an intermediate position between the two end positions shown in Figs. 6A and 6C.

The operation of the flexible coupling device is similar to the one described with reference to Figs. 3, 4A, 4B, 4C with the difference that the elastic energy accumulates in the helical spring 102 rather than in the Belleville washer 102.

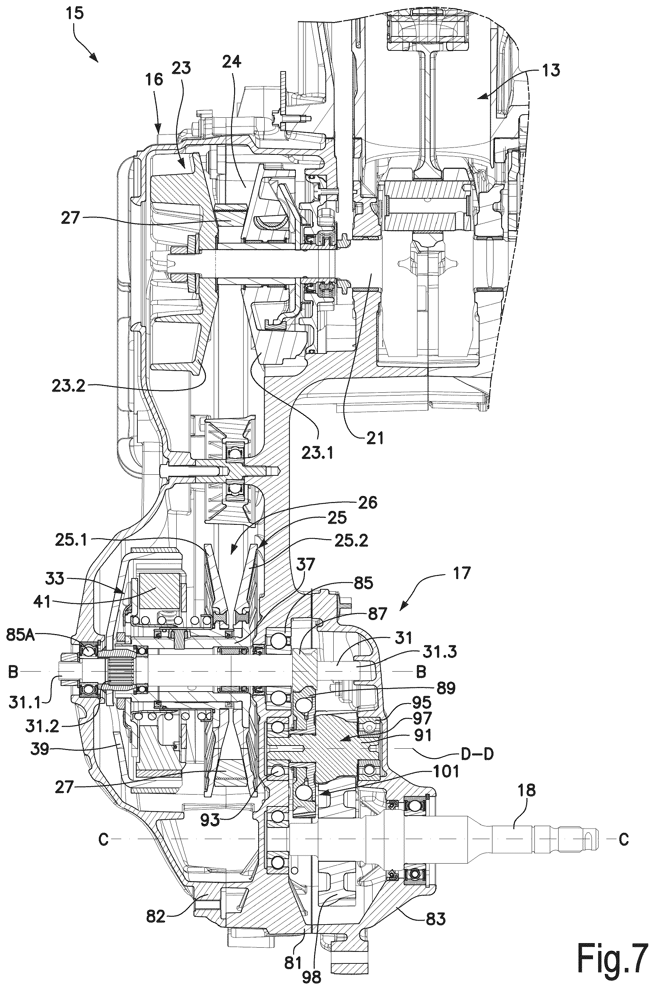

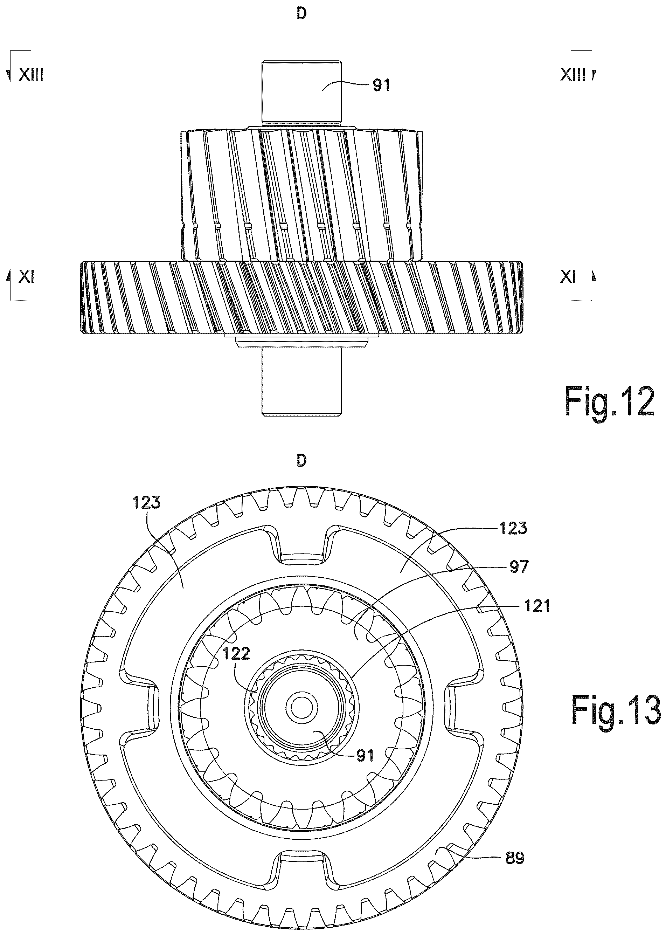

Figs.7, 8, 9, 10, 11, 12 and 13 show a further embodiment of a transmission unit with a continuously variable transmission and flexible coupling in the gear reducer.

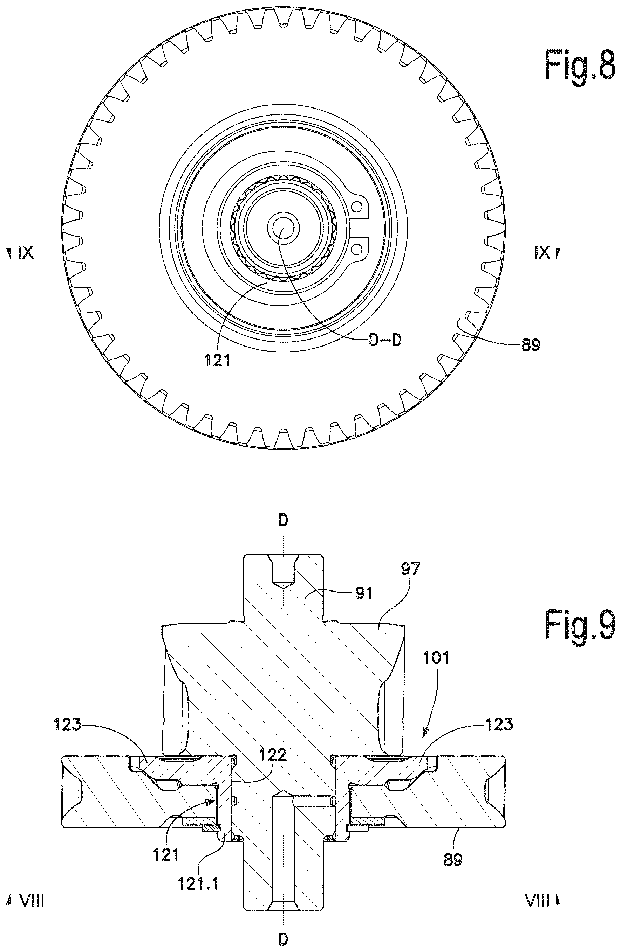

Specifically, Fig.7 shows a cross-section of the transmission unit 15 with the continuously variable transmission 16 and the respective gear reducer 17, in a cross-section containing the axes of the pulleys of the continuously variable transmission and the output axis of the clutch. Indicated with 18 is the output shaft of the gear reducer 17, hereinafter referred to as drive wheel, and the rotation axis of the drive wheel 11 (not shown herein) and of the driven shaft 18 of the gear reducer 17 is indicated with C-C. Figs. 8 to 13 show views and cross-sections of the flexible coupling device incorporated in one of the gearwheels of the gear reducer 17. Identical numbers indicate identical parts or parts corresponding to those of the embodiments described with reference to Figs. 2 to 6C. These elements are described below by way of summary.

The engine 13 comprises a drive shaft 21, on which a drive pulley 23 of the continuously variable transmission 16 is keyed. The drive pulley 23 comprises a first semi-drive pulley 23.1 and a second semi-drive pulley 23.2 which form therebetween a groove 24 with a variable axial dimension, i.e. a groove, the width whereof in the direction of the rotation axis A-A of the drive shaft 1 may vary as a function of the travel conditions. The continuously variable transmission 16 further comprises a driven pulley 25. The driven pulley 25 in turn comprises a first semi-driven pulley 25.1 and a second semi-driven pulley 25.2. rotatable around a rotation axis B-B of the driven pulley 25. Also the semi-driven pulleys 25.1, 25.2 are movable with respect to each other in the axial direction, i.e., parallel to the rotation axis B-B, so as to change the width of a groove 26 defined between the semi-driven pulleys 25.1, 25.2.

A belt 27 is guided between the two pulleys 23, 25,, which transmits the motion of the drive pulley to the driven pulley 25.

The mutual approaching/moving away movement in the axial direction of the two semi-drive pulleys 24.1, 24.2 is controlled through a centrifugal system, as described above with reference to the diagram of Fig.2. To the mutual approaching and moving away movement of the semi-drive pulleys 24.1, 24.2 there corresponds a moving away and approaching movement of the semi-driven pulleys 25.1, 25.2, as described above, with resulting change in the transmission ratio.

An automatic clutch 33, similar to the one shown in Figs. 3 and 5 and described in detail above, is associated with the driven pulley 25 of the continuously variable transmission 16..

In short, and with reference to the above for greater details, the automatic clutch 33 comprises a hollow input shaft 37, coaxial to a shaft 31 for the output of motion from the automatic clutch 33. The output shaft 31 of the clutch 33 represents the shaft for the output of motion from the continuously variable transmission 16 and represents the input shaft of the gear reducer 17, which transmits motion to the drive wheel through the driven shaft 18. The latter represents the output shaft of the gear reducer 17.

The automatic clutch 33 further comprises a bell or hollow body 39, torsionally coupled to the output shaft 31, that is rotatable together with the output shaft 31. Centrifugal masses 41 cooperate with the bell 39,, which are radially movable with respect to the axis B-B and act as a member for transmitting the rotation motion from the input shaft 37 to the motion output shaft 31 when the automatic clutch 33 is engaged, as described above.

The bell 39 is torsionally coupled to the shaft 31 for the output of motion from the automatic clutch 33 near a first end 31.1 of such shaft 31. For example, the coupling between the bell 39 and shaft 31 may be obtained with a splined profile 31.2.

The gear reducer 17 is housed in a casing 80, which also houses the continuously variable transmission 17, and which has a main body 81 and a lid 83. Fig.7 also shows a second lid 82 of the casing 80. Fig.7 shows that the output shaft 31 of the clutch 33, which forms the input shaft of the gear reducer 17, is supported by two bearings 85 and 85A mounted in respective seats of the casing 80.

The gear reducer 17 comprises a plurality of gearwheels, which transmit motion from the output shaft 31 of the automatic clutch 33, to the output shaft 18 of the gear reducer 17.

Specifically, the gear reducer 17 comprises a first gearwheel 87, which also in this case may be a helical gearwheel mounted on the shaft 31 and rotating therewith around the axis B-B. However, while in the embodiments above the use of helical gearwheels is necessary for the correct operation of the flexible coupling device, in the embodiment of Figs. 7 to 13 straight-teeth gears may also be used.

Contrary to the embodiments outlined above, the first helical gearwheel 87 is rigidly connected to the shaft 31, so as not to carry out axial movements along the axis B-B. For example, the shaft 31 and the first helical gearwheel 87 may be made of a single piece, that is as a single block. However, there cannot be ruled out the possibility of providing the first helical gearwheel 87 separately from the shaft 31, and coupling these two components for example with a key, a splined profile or other system, which also provides a block in the axial direction of the first helical gearwheel 87 on the shaft 31.

The first helical gearwheel 87 meshes with a second helical gearwheel 89, rotating integrally with a second shaft of the gear reducer 17, herein indicated as auxiliary shaft 91, idly supported in the casing 81 by bearings 93, 95 and rotating around an axis D-D, in the example parallel to the axis A-A, B-B and C-C. The second helical gearwheel 89 is connected to the auxiliary shaft 91 as described below in greater detail with reference to Figs. 8 to 13. The second helical gearwheel 89 is associated with a flexible coupling device 101 described below.

A further gearwheel 97 is integrally joined with the auxiliary shaft 91 , and can be keyed to the auxiliary shaft 91 or made of a single piece therewith, as shown by way of example in Fig.7. The further gearwheel 97, also possibly provided with helical teeth, may mesh with an output gearwheel 98, keyed on the driven shaft 18.

The second gearwheel 89 and the flexible coupling device 101 of this embodiment are shown in detail in Figs. 8 to 13.

The flexible coupling device 101 is integrated in the gearwheel 89 and it is interposed between the gearwheel 89 and the auxiliary shaft 91, which supports the gearwheel 89. In this embodiment, the flexible coupling device comprises at least one elastic member configured to absorb torque peaks transmitted between the gearwheel 89 and the auxiliary shaft 91 which supports the gearwheel 89.

More specifically, the flexible coupling device 101 comprises a sleeve 121 which is torsionally constrained to the auxiliary shaft 91. For example, the sleeve 121 may be torsionally coupled to the auxiliary shaft 91 by a splined profile 122. The gearwheel 89 is supported on the sleeve 121 in a rotatable manner, that is so as to carry out angular movements with respect to the sleeve 121 around the axis D-D. The sleeve 121 is torsionally coupled to the gearwheel 89 by interposing the at least one elastic member mentioned above.

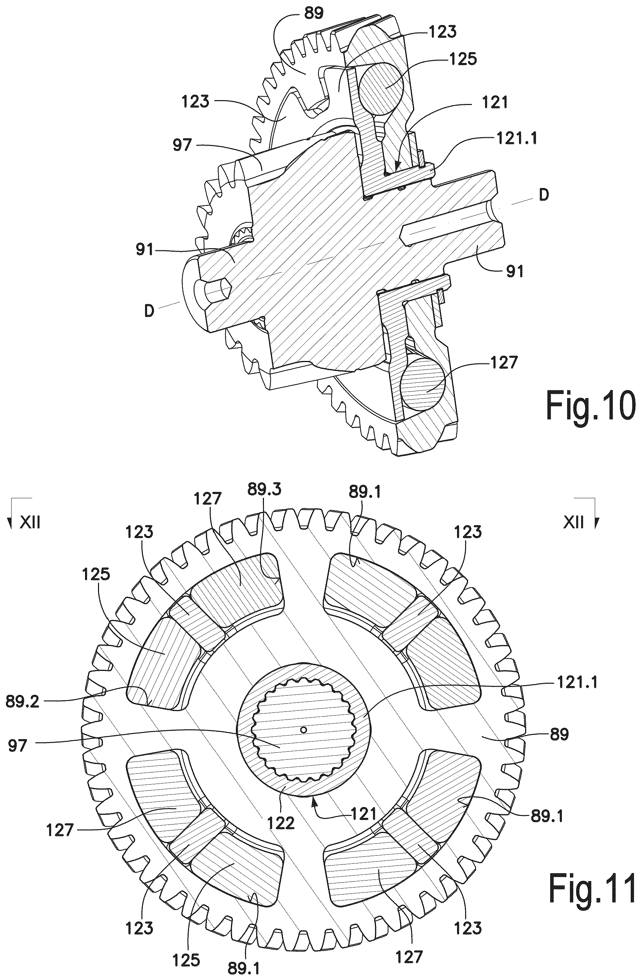

More specifically, the sleeve 121 comprises at least one radial element, preferably a plurality of radial elements 123, which extend radially from a generally cylindrical body 121.1 of the sleeve 121. Each radial element 123 protrudes in a respective tangential cavity 89.1 of the gearwheel 89. Two elastic members 125, 127 are disposed in each tangential cavity 89.1 of the gearwheel 89. A first elastic member 125 is interposed between a first radial wall 89.2 of the respective tangential cavity 89.1 of the gearwheel 89 and the radial element 123 of the sleeve. The second elastic member is interposed between a second radial wall 89.3 of the tangential cavity 89.1 of the gearwheel 89 and the radial element 123 of the sleeve 121 (in particular see Fig. 11).

In this embodiment, the flexible coupling device 101 operates as follows. A change in the torque transmitted from the shaft 31 to the auxiliary shaft 91 through the gearwheels 87, 89 causes a mutual rotary movement between the gearwheel 89 and the sleeve 121, allowed by the compression of the elastic members 125, 127 of each tangential seat 89.1. These elastic members carry out a mechanical energy storage function in the form of elastic compression energy, in a manner similar to the function carried out by the Belleville compression washer 102 of Figs. 3, 4 4B, 4C or by the helical compression spring 102 of the embodiment of Figs. 5, 6A, 6B, 6C.

The flexible coupling device in the various embodiments described above allows to reduce the unevenness of the torque transmitted from the engine 13 to the drive wheel 11. The torque oscillations which occur in particular with low number of revolutions are at least partly absorbed by the contraction and extension of the elastic member 102 formed by the compression spring of the embodiments of Figs. 3 to 6C, or by one or more of the elastic members 125, 127 of the embodiments of Figs. 7 to 12.

The damping abutments 105 and 107 (Figs.3 to 6C) absorb the impacts of the first helical gearwheel 87, making the operation of the motor vehicle even more regular. In the embodiment of Figs. 7 to 13, the operation of abutments 105, 107 is carried out by the elastic members 125, 127.

In all embodiments described above, the flexible coupling device is very compact and can be housed in spaces already occupied by other mechanical members, still present in the kinematic chain for transmitting motion from the continuously variable transmission 16 to the output shaft 18 which transmits motion to the drive wheel 11.

The flexible coupling device of the embodiment shown in Figs. 7 to 12 may be advantageously used in a kinematic chain different from the one described herein, for example which does not provide for a continuously variable transmission. In this case, the flexible coupling device comprises: a gearwheel; a sleeve coaxial to the gearwheel and angularly movable with respect thereto; the sleeve comprises members for the torsional coupling to a support shaft, for example a splined profile. The flexible coupling device further comprises an elastic member configured to absorb torque peaks transmitted between the gearwheel and the sleeve, wherein the sleeve is torsionally coupled to the gearwheel through said at least one elastic member, so that the elastic deformation of the elastic member allows an angular staggering between the gearwheel and the sleeve. The sleeve may comprise at least one radial element protruding in a tangential cavity of the gearwheel. The at least one elastic member may be interposed between a first radial wall of the tangential cavity of the gearwheel and the radial element of the sleeve, and a second elastic member may be interposed between a second radial wall of the tangential cavity of the gearwheel and the radial element of the sleeve.

Exemplary embodiments have been described above and illustrated in the attached drawings. Those skilled in the art will understand that various changes, omissions and additions to what is specifically disclosed herein may be made without departing from the scope of the invention as described in the claims below.

## Claims

1. A transmission unit comprising:
a continuously variable transmission comprising: a drive pulley; a driven pulley; a drive belt between the drive pulley and the driven pulley; and a clutch having an input shaft, mechanically connected to the driven pulley, and an output shaft;
a reduction gear comprising a plurality of gearwheels arranged between the output shaft of the clutch and a driven shaft adapted to be connected to a drive wheel; and
a flexible coupling device associated with one of said gearwheels.

2. The transmission unit of claim 1, wherein:
the reduction gear comprises:
➢ a first helical gearwheel, arranged on a first shaft; wherein the first helical gearwheel is torsionally coupled to the first shaft and axially slidable along the first shaft; and
➢ a second helical gearwheel meshing with the first helical gearwheel keyed on a second shaft;
and wherein the flexible coupling device comprises an elastic member which axially urges the first helical gearwheel towards an inoperative position in a direction opposite to an axial thrust which is generated on the first helical gearwheel when the transmission unit is operating and transmits a torque from the output shaft of the clutch towards the driven shaft.

3. The transmission unit of claim 2, wherein the flexible coupling device comprises an elastic damping abutment, towards which the first helical gearwheel is thrust axially by the elastic member.

4. The transmission unit of claim 2 or 3, wherein the first helical gearwheel is integrally coupled to a bushing extending coaxially to the first shaft, and wherein the elastic member is housed between the bushing and the first shaft.

5. The transmission unit of any of claims 2 to 4, wherein the first shaft is the output shaft of the clutch.

6. The transmission unit of claim 5, wherein the elastic member is configured to urge the first helical gearwheel in a moving away direction with respect to the clutch.

7. The transmission unit of claim 5 or 6, wherein the first helical gearwheel is mounted on a portion of the output shaft of the clutch which protrudes cantilevered from a support bearing.

8. The transmission unit of claim 7, when dependent upon claim 4, wherein the bushing extends from the first gearwheel towards a cantilevered distal end of the output shaft of the clutch, the distal end being opposite to the clutch.

9. The transmission unit of claim 8, wherein the elastic member reacts between an abutment formed by the output shaft of the clutch and an inner projection of the bushing.

10. The transmission unit of claim 9, when dependent upon claim 3, comprising a collar applied to the distal end of the output shaft of the clutch, to which the elastic damping abutment is fixed.

11. The transmission unit of one or more of claims 2 to 10, wherein the second shaft is an intermediate shaft of the reduction gear, arranged between the output shaft of the clutch and the driven shaft.

12. The transmission unit of one or more of claims 2 to 9, wherein the first shaft and the second shaft are parallel to each other.

13. The transmission unit of claim 1, wherein:
the flexible coupling device is integrated in a reduction gear and it is interposed between the gearwheel and a support shaft of said gearwheel; and
the flexible coupling device comprises at least one elastic member configured to absorb torque peaks transmitted between the gearwheel and the support shaft of the gearwheel.

14. The transmission unit of claim 13, wherein:
the flexible coupling device comprises a sleeve torsionally constrained to the support shaft;
the gearwheel is rotatably supported on the sleeve; and
the sleeve is torsionally coupled to the gearwheel by said at least one elastic member.

15. The transmission unit of claim 14, wherein the sleeve comprises at least one radial element protruding in a tangential cavity of the gearwheel; and wherein the at least one elastic member is interposed between a first radial wall of the tangential cavity of the gearwheel and the radial element of the sleeve, and a second elastic member is interposed between a second radial wall of the tangential cavity of the gearwheel and the radial element of the sleeve.

16. The transmission unit of claim 13, 14 or 15, wherein the support shaft of the gearwheel is an intermediate reduction gear between the output shaft of the clutch and the driven shaft.

17. The transmission unit of claim 16, wherein the gearwheel in which the flexible coupling device is integrated meshes with an upstream gearwheel, keyed on the output shaft of the clutch, and receives the motion from the upstream gearwheel.

18. A motor vehicle comprising an internal combustion engine and a drive wheel connected to the internal combustion engine through a transmission unit according to one or more of the preceding claims.

19. The motor vehicle of claim 18, wherein said motor vehicle is a straddle-type motor vehicle.
